# EUROPÄISCHE PATENTANMELDUNG

(11) **EP 2 439 463 A2**
(43) Veröffentlichungstag der Anmeldung: **11.04.2012**
(21) Anmeldenummer: 11007550.4
(22) Anmeldetag: 16.09.2011
(51) Int. Cl.: F24J 2/52, H01L 31/042

(54) **Befestigungsvorrichtung zur lösbaren Halterung von plattenförmigen Modulen**

(30) Priorität: 06.10.2010 DE 202010013976 U
(71) Anmelder: WEMEFA Horst Christopeit GmbH, 42555 Velbert (DE)
(72) Erfinder: Rose, Dietmar, 45663 Recklinghausen (DE)
(74) Vertreter: Patentanwälte Buse, Mentzel, Ludewig

(57) **Zusammenfassung**

Befestigungsvorrichtung zur lösbaren Halterung von plattenförmigen Modulen (10, 10'), insbesondere Solarmodulen bzw. Photovoltaikmodulen. Diese Module werden über Tragschienen (20) gehaltert und diese Tragschienen (20) werden über Dachhaken (50) am Dach befestigt. Die vorliegende Erfindung schlägt nun vor, dass der Dachhaken (50) seitlich an der Tragschiene (20) festgelegt wird und zwar mittels einer Befestigungsschraube (6), die mit einer Befestigungsmutter (62) zusammenwirkt, welche in der hinterschnittenen Nut (22) lagert, wobei die Nut (22) in einer Seitenwand (24) der Tragschiene (20) eingeformt ist und sich an der gleichen Seitenwand (24) Mittel zur Bildung eines Kabelkanals (70) befinden. Die Dachhaken (50) können dabei einen C-förmigen Kragarm (51) mit einem oberen Steg (52) und einem unteren Steg (53) umfassen, wobei der obere Steg (52) so über dem unteren Steg (53) angeordnet ist, dass er sich ausgehend vom unteren Steg (53) in einer gedachten Verlängerungslinie befindet

## Beschreibung

Die Erfindung betrifft eine Befestigungsvorrichtung zur lösbaren Halterung von plattenförmigen Modulen, insbesondere von Solarmodulen bzw. von Photovoltaikmodulen.

Derartige Befestigungen sind aus dem Gebrauchsmuster DE 20 2009 007 418 U1 bekannt. Die Halterung erfolgt mittels Klemmprofilen, welche die plattenförmigen Module randseitig umfassen und über eine Schraubverbindung an einer darunter liegenden Tragschiene festlegen. Ebenfalls über eine Schraubverbindung wird die Tragschiene mit einem Dachhaken verbunden, der eine Verbindung zu einer beliebigen Unterkonstruktion gewährleistet. In vorteilhafter Weise erfolgen bei dieser Befestigungsvorrichtung die Schraubverbindungen mittels einer Schraubmutter, die an ihrer Unterseite mit einer Druckfeder verbunden ist. Dies ermöglicht eine sehr einfache Modulbefestigung, da die Druckfeder ein leichtes Vorfixieren der Schraubmutter in der Nut realisiert. Bei entsprechender rautenförmiger Ausgestaltung der Schraubmutter kann diese auch von oben in eine Nut der Tragschiene eingesetzt werden. Nachteilig bei dieser Vorrichtung ist, dass die Tragschiene eine nach unten offene Nut für den Dachhaken besitzt, so dass eine zur Festlegung des Dachhakens notwendige Schraube von unten her eingeführt und festgezogen werden muss, d.h. der Monteur sieht bei der Befestigung der Schraube nicht, die in der Nut vorfixierte Schraubmutter.

An der vorbekannten Tragschiene können in vorteilhafter Weise Mittel vorgesehen werden, um eine zusätzliche Profilleiste mit einem Ende schwenkbar an der Tragschiene zu lagern sowie mit dem anderen Ende an der Tragschiene lösbar zu befestigen. Eine solche Profilleiste ergibt in ihrer Befestigungslage einen geschlossenen Kabelkanal. Gemäß DE 20 2009 007 419 U1 wird ein solcher Kabelkanal durch die Profilleiste und eine Seitenwand der Tragschiene gebildet.

Aufgabe der Erfindung ist es, eine verbesserte montagefreundliche Befestigungsvorrichtung zur lösbaren Halterung von plattenförmigen Modulen aufzuzeigen, wobei in vorteilhafter Weise auch ein geschlossener Kabelkanal vorgesehen sein kann.

Diese Aufgabe wird mit einer Befestigungsvorrichtung mit den Merkmalen des Anspruchs 1 gelöst. Wie beim Stand der Technik umfasst die Befestigungsvorrichtung Klemmprofile zum randseitigen Niederhalten der plattenförmigen Module sowie Tragschienen für die Halterung der plattenförmigen Module sowie Dachhaken zur lösbaren Befestigung der Tragschiene an einer Unterkonstruktion, beispielsweise an Dachsparren. Die Befestigung der Klemmprofile und der Dachhaken an der Tragschiene erfolgt mittels Schraubverbindungen, wobei die Tragschiene mindestens zwei in Längsrichtung der Tragschiene verlaufende, hinterschnittene Nuten für diese Schraubverbindungen besitzt, nämlich eine erste Nut zur lösbaren Befestigung der Klemmprofile, welche sich an der Oberseite der Tragschiene befindet und eine zweite Nut zur lösbaren Befestigung der Dachhaken, welche in einer Seitenwand der Tragschiene eingeformt ist. Es ist auch möglich, eine solche Nut für die Befestigung der Dachhaken an beiden Seitenwänden vorzusehen. In der Regel ist das Vorsehen der Nut zur Befestigung der Dachhaken in einer Seitenwand ausreichend. Die zweite Seitenwand und die Unterseite der Tragschiene kann im Wesentlichen eine ebene geschlossene Fläche darstellen, so dass kein unnötiger Schmutz oder Feuchtigkeit in der Tragschiene ansammelt.

An der gleichen Seitenwand, an der die Nut zur Befestigung der Dachhaken eingeformt ist, sind des Weiteren Mittel zur Bildung eines Kabelkanals angeordnet. Diese Mittel zur Bildung des Kabelkanals können zusätzlich auch an der gegenüberliegenden Seitenwand vorgesehen sein. Bei diesen Mitteln zur Bildung eines Kabelkanals handelt es sich um eine gelenkpfannenartige Aufnahme, die vorzugsweise im Bereich der unteren Ecken der Tragschiene vorgesehen ist. Diese gelenkpfannenartige Aufnahme dient der Lagerung eines Gelenkkopfes, welcher sich an einem Ende einer zusätzlichen Profilleiste befindet, so dass eine drehgelenkige Verbindung dieser Profilleiste mit der Tragschiene ermöglicht wird. Die Profilleiste ist somit schwenkbar an der Tragschiene gelagert und kann mit ihrem anderen oberen Ende an der Tragschiene festgeklemmt werden. Es ergibt sich ein geschlossener Kabelkanal, der durch die Seitenwand der Tragschiene und durch die zusätzliche Profilleiste gebildet ist. Die Profilleiste ist vorzugsweise im Querschnitt C-förmig ausgestaltet, so dass sich ein möglichst großer Kabelkanal ergibt. Für die Klemmverbindung des oberen Endes der Profilleiste ist im oberen Bereich der Seitenwand, an der die gelenkpfannenartige Aufnahme vorgesehen ist, eine Klemmleiste angeformt. Diese wirkt mit einer am oberen freien Ende der Profilleiste vorgesehenen Hakenleiste zusammen. Die Klemmverbindung zwischen der an der Profilleiste angeformten Hakenleiste und der an der Tragschiene angeformten Klemmleiste ist lösbar, so dass der einmal geschossene Kabelkanal wieder geöffnet werden kann. Dieses Öffnen wird erleichtert, wenn benachbart zur Hakenleiste eine Griffleiste an der Profilleiste vorgesehen wird. Eine solche Griffleiste kann ein abragender abgebogener Steg sein, den man mittels eines Werkzeugs hintergreifen kann, um die Profilleiste aus der Klemmverbindung zu lösen.

Die Tragschiene kann, wie bereits dargelegt, zwei bis vier Nuten aufweisen. Bevorzugt sind zwei in Längsrichtung der Tragschiene verlaufende hinterschnittene Nuten, nämlich eine Nut eingeformt in die Oberseite der Tragschiene und eine Nut eingeformt in eine Seitenwand. Zur Befestigung des Dachhakens an der Tragschiene wird der Dachhaken mit einer Anlagefläche an die Seitenwand angelegt, eine Befestigungsschraube durch ein am Dachhaken vorgesehenes Öffnung geführt und mit einer in der hinterschnittenen Nut aufgenommenen Mutter verbunden. Durch die Verwendung von Muttern, die an ihrer Unterseite mit einer Druckfeder verbunden sind und daher in der Nut leicht vorfixiert werden können, wird die Einführung der Schraube erleichtert. Bei einer besonderen Ausführungsform kann die rautenförmig ausgestaltete Mutter auch von oben her in die Nut eingesetzt werden und muss nicht seitlich in den für die Mutter vorgesehenen Aufnahmeraum eingeführt werden. Beim seitlichen Befestigen des Dachhakens ist der Montagevorgang zusätzlich dadurch erleichtert, dass alle Befestigungsteile der Schraubverbindung gut zu sehen und zu handhaben sind.

Im Befestigungsfall ist der Dachhaken durch das Anziehen der Schraube mit der Tragschiene verspannt. In gleicher Weise erfolgt die Schraubverbindung zwischen dem Klemmprofil und der Tragschiene. Da der Dachhaken seitlich an der Tragschiene angebracht wird, kann bei der Montage ein Verrutschen des Dachhakens erfolgen. Zur Unterbindung eines solchen unerwünschten Verrutschens wird sowohl an der Seitenwand der Tragschiene als auch an der Anlagefläche des Dachhakens zur rutschfesten Anlage eine Riffelung vorgesehen. Diese Riffelung kann in einer aufgerauten Oberfläche bestehen, vorzugsweise werden jedoch horizontal verlaufende Rippen entlang der Seitenwand der Tragschiene bzw. der Anlagefläche des Dachhakens vorgesehen.

Durch die seitliche Dachhakenbefestigung ist eine im Vergleich zum vorgenannten Stand der Technik, wo der Dachhaken an der Unterseite festgelegt wird, einfachere Montage möglich. In gleicher Weise wie beim Stand der Technik können die Tragschienen und die zur Bildung des Kabelkanals zusätzlich vorgesehenen Profilleisten als Strangpressprofile hergestellt werden. Dies können Strangpressprofile aus Kunststoff oder Metall sein, vorzugsweise aus Aluminium, da dieser Werkstoff ein leichtes Gewicht mit einer hohen Festigkeit und einer guten Korrosionsbeständigkeit kombiniert.

Für die erfindungsgemäße Befestigungsvorrichtung können Dachhaken verwendet werden, die eine vertikal ausgerichtete Anlagefläche besitzen. Derartige Dachhaken sind bekannt. Darüber hinaus kann ein neuer Dachhaken an dieser Befestigungsvorrichtung eingesetzt werden, der einen C-förmigen Kragarm mit einem einstückig am oberen Ende des Kragarms vorgesehenen vertikal ausgerichteten oberen Steg und mit einem einstückig am unteren Ende des Kragarms vorgesehenen weiteren vertikal ausgerichteten unteren Steg besitzt. Der obere Steg ist zum Anschluss an die Tragschiene vorgesehen, insbesondere zum seitlichen Anschluss und besitzt die senkrecht ausgerichtete Anlagefläche zur Anlage an der Seitenwand der Tragschiene. Diese Anlagefläche wird vorzugsweise zur rutschfesten Anlage an der Seitenwand der Tragschiene ebenfalls mit einer Riffelung versehen. Durch den oberen Steg verläuft ein Langloch zum Durchstecken der Schraube für den Anschluss an die Tragschiene. Hierdurch wird eine höhenvariablen Schraubverbindung mit der Tragschiene ermöglicht. Der untere Steg geht endseitig in eine waagerecht ausgebildete Befestigungsplatte über. Diese Befestigungsplatte ist ebenfalls einstückig mit dem unteren Steg ausgebildet und dient zur Verbindung mit der Dachunterkonstruktion.

In erfindungsgemäßer Ausführung ist der obere Steg des Kragarms so über den unteren Steg des Kragarms angeordnet, dass er sich ausgehend vom unteren Steg in einer gedachten Verlängerungslinie über dem unteren Steg befindet, wobei diese Verlängerungslinie senkrecht verläuft. Eine solche Ausführung des Dachhakens hat sich als besonders vorteilhaft erwiesen, da die Traglasten senkrecht in das Dach abgeführt werden. Der C-förmige Bereich des Kragarms berücksichtigt die Ausgestaltung der Unterkonstruktion, beispielsweise die Dicke von Dachziegeln und wirkt gleichzeitig durch die C-Form wie eine Feder.

Die Erfindung wird nachstehend anhand eines Ausführungsbeispiels näher erläutert. Die Erfindung ist nicht auf dieses Ausführungsbeispiel beschränkt. Es zeigen:
- Fig. 1: Seitenansicht einer erfindungsgemäßen Befestigungsvorrichtung,

- Fig.2: Vorderansicht der Befestigungsvorrichtung gemäß Fig. 1,
- Fig.3: Querschnitt durch eine erfindungsgemäße Tragschiene,
- Fig.4: Querschnitt durch eine Tragschiene mit geschlossenem Kabelkanal.

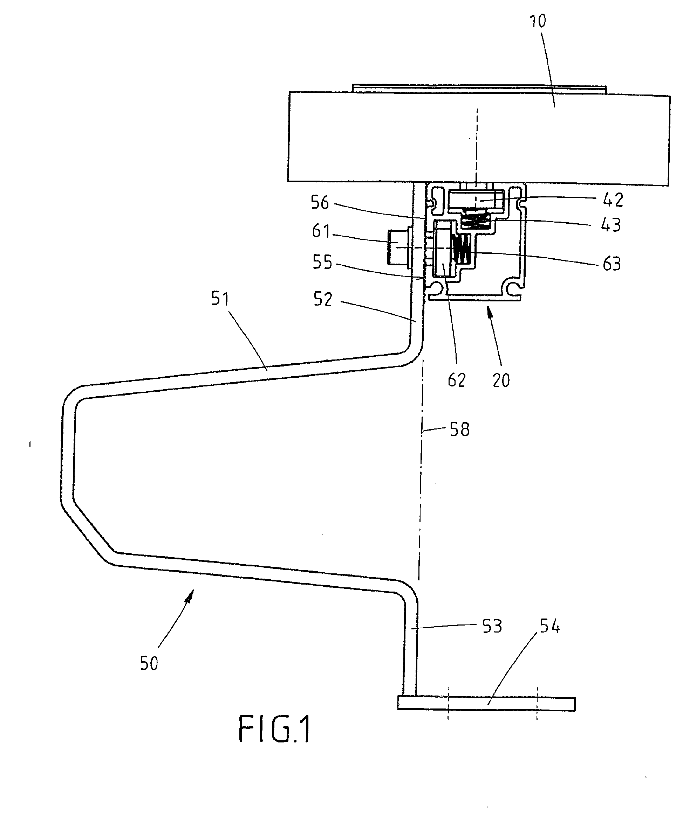

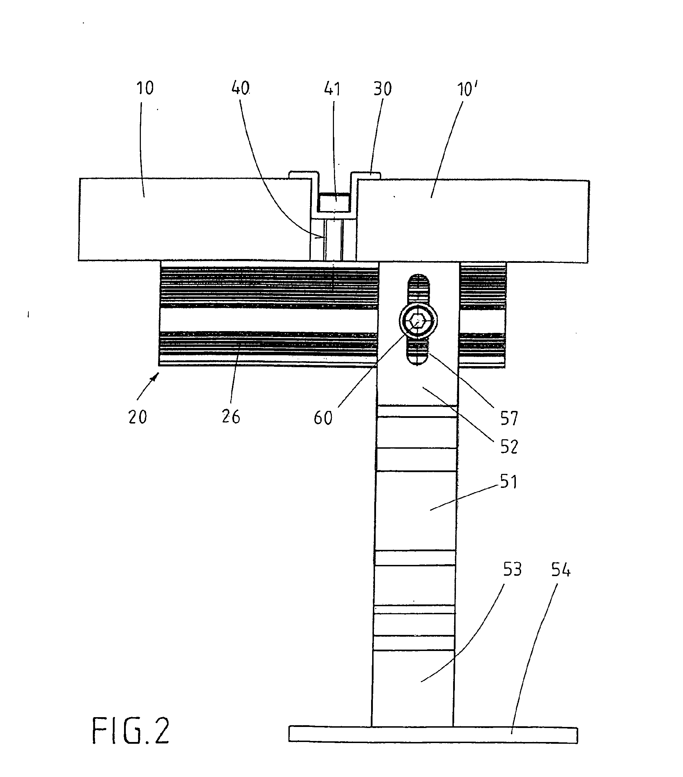

Die Fig.1 und Fig.2 zeigen die Befestigung von plattenförmigen Modulen 10, 10', insbesondere von Solarmodulen oder Photovoltaikmodulen. Diese Module 10, 10' liegen auf einer Tragschiene 20 auf und sind über Klemmprofile 30, welche die Module 10, 10' randseitig übergreifen mittels einer Schraubverbindung 40 an der Tragschiene 20 festgelegt. Diese Konstruktion lässt sich auf unterschiedlichen Unterkonstruktionen anordnen, vorzugsweise auf Schräg- oder Flachdächern, aber auch an freistehenden Konstruktionen.

In der Fig.1 und Fig.2 ist die Verbindung der Tragschiene 20 mit einem Dachhaken 50 gezeigt, der zur Festlegung der Tragschiene 20 mit den Modulen 10, 10' an einer Unterkonstruktion dient. Die Konstruktion lässt sich auf unterschiedlichen Unterkonstruktionen anordnen, vorzugsweise auf Schräg- oder Flachdächern, aber auch an freistehenden Konstruktionen, was in den Figuren nicht gezeigt ist. Die Befestigung des Dachhakens 50 an der Tragschiene 20 erfolgt wie die Befestigung des Klemmprofils 30 jeweils über eine Schraubverbindung 40, 60. Bei der Schraubverbindung 40 greift eine Schraube 41 durch das Klemmprofil 30 und wird mit einer Mutter 42 verbunden, die in einer oberen Nut 21 der Tragschiene 20 angeordnet ist. Diese Mutter 42 ist an ihrer Unterseite mit einer Druckfeder 43 verbunden. In gleicher Weise wird die Schraubverbindung 60 zwischen dem Dachhaken 50 und der Tragschiene 20 vorgenommen. Hier greift eine Schraube 61 durch eine Durchgangsöffnung des Dachhakens 50 und wird mit einer Mutter 62 verbunden, die sich in einer seitlich geöffneten Nut 22 der Tragschiene 20 befindet. Auch diese Mutter 62 ist an ihrer Unterseite mit einer Druckfeder 63 verbunden. Wird also die Schraube 41 oder 61, beispielsweise eine Sechskantschraube, angezogen, legt sich der Kopf der Schraube 41 oder 61, eventuell zusammen mit einer Unterlegscheibe, am Klemmprofil 30 bzw. am Dachhaken 50 an und die Schraube 41 oder 61 verspannt die Tragschiene 20 mit dem aufliegenden Klemmprofil 30 bzw. mit dem seitlich befestigten Dachhaken 50. Eine solche seitliche Befestigung eines Dachhakens 50 ist sehr montagefreundlich, da der Monteur die Befestigungsschraube 61 und die Mutter 62 sehen kann und er wird auch während des Befestigungsvorgangs nicht, beispielsweise durch räumliche Engstellen, behindert.

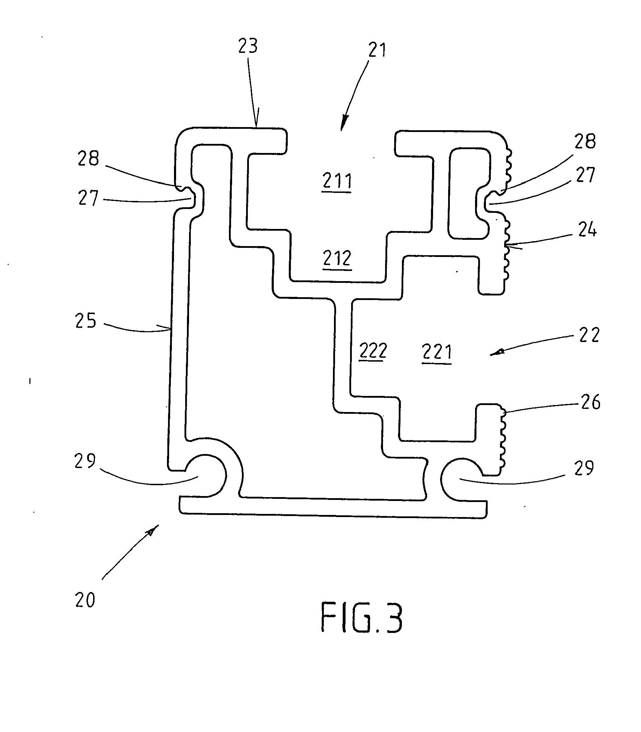

Für eine höhenvariable Anbindung des Dachhakens 50 ist die Öffnung im Dachhaken 50 als Langloch 57 ausgestaltet, so dass sich eine höhenvariable Schraubverbindung 60 ergibt. Die Montage wird des Weiteren erleichtert dadurch, dass am oberen Steg 52 des Dachhakens 50 die zur Tragschiene 20 gerichtete Anlagefläche 55 des Dachhakens 50 mit einer Riffelung 56 versehen ist, die mit einer Riffelung 26 an der Seitenwand 24 der Tragschiene 20 zusammenwirkt. Diese Riffelung 26 an der Seitenwand 24 der Tragschiene 20 befindet sich vorzugsweise oberhalb und unterhalb der Öffnung zur hinterschnittenen Nut 22, die der Anbindung des Dachhakens 50 dient. Die Fig.1 zeigt eine seitliche Befestigung des Dachhakens 50 an der linken Seitenwand 24 der Tragschiene 20. Soll eine seitliche Befestigung des Dachhakens 50 von rechts an der Tragschiene 20 vorgesehen werden, kann dazu die gleiche Tragschiene 20 verwendet werden. Die Tragschiene 20 wird gedreht, so dass sich die Nut 22 auf der gegenüberliegenden Seite befindet. Eine solche Ausrichtung der Tragschiene 20 ist in Fig.3 gezeigt.

In der Fig.1 und der Fig.2 ist eine besonders vorteilhafte Ausgestaltung eines Dachhakens 50 gezeigt. Dieser besteht aus einem C-förmigen Kragarm 51, der am oberen Ende in einen vertikalen oberen Steg 52 übergeht, an dem sich die Anlagefläche 55 mit der Riffelung 56 und dem Langloch 57 befindet. An seinem unteren Ende geht der C-förmige Kragarm ebenfalls in einem vertikalen Steg über, nämlich den unteren Steg 53. Der obere Steg 52 und der untere Steg 53 sind so zueinander ausgerichtet, dass sie unmittelbar übereinander angeordnet sind, d.h. der obere Steg 52 befindet sich auf einer gedachten Verlängerungslinie 58 ausgehend vom unteren Steg 53. Zur Befestigung an einer Dachunterkonstruktion ist der untere Steg 53 mit einer Befestigungsplatte 54 einstückig verbunden, die Befestigungsbohrungen besitzt, durch welche Schraubverbindungen mit einer Unterkonstruktion vorgenommen werden können. Diese waagerechte Befestigungsplatte 54 ist in diesem Ausführungsbeispiel um 90° zum vertikalen unteren Steg 53 ausgerichtet. Die Traglasten der gesamten Befestigungsvorrichtung werden über die Dachhaken 50 in das Dach eingeleitet, wobei diese Verbindung aufgrund des C-förmigen Bereichs des Kragarms 51 nicht völlig starr ist. Dieser Kragarm 51 kann sich geringfügig ändernde Drucklasten abfedern.

Die für die Befestigungsvorrichtung verwendete Tragschiene 20 ist am besten aus der Fig.3 zu ersehen, wo die Tragschiene 20 im Querschnitt gezeigt ist. Diese Tragschiene 20 besitzt zwei hinterschnittene Nuten 21, 22. Die obere Nut 21 ist in die Oberseite 23 der Tragschiene 20 eingeformt und die Nut 22 in die Seitenwand 24. Die obere Nut 21 dient der Befestigung des Klemmprofils 30, wie in der Fig.1 und der Fig.2 gezeigt. Die Nut 22, die sich in seitlicher Richtung öffnet, dient der seitlichen Befestigung des Dachhakens 50. Beide Nuten 21, 22 sind gleichgestaltete hinterschnittene Nuten mit einer Aufnahmeöffnung, die jeweils durch Stege begrenzt wird. Die Nuten 21, 22 besitzen einen vorderen Aufnahmebereich 211, 221 und einen hinteren Aufnahmebereich 212, 222. Der vordere Aufnahmebereich 211, 221 dient der Aufnahme der Muttern 42, 62 und der hintere Aufnahmebereich 212, 222 der Aufnahme der jeweils an den Muttern 42, 62 angeformten Druckfedern 43, 63. Zur Montage der Module 10, 10' an der Tragschiene 20 werden diese auf die Tragschiene 20 aufgelegt, zwischen zwei benachbarten Modulen 10, 10' wird das Klemmprofil 30 eingefügt und zwar so, dass sich die Schenkel des Klemmprofils 30 stirnseitig an die Ränder der Module 10, 10' anlegen und die Schraubverbindung 40 mit der Tragschiene 20 vorgenommen. Die Befestigung des Dachhakens 50 erfolgt durch Anlegen des oberen Stegs 52 mit seiner Anlagefläche 55 an der Seitenwand 24, die für eine rutschfeste Anlage eine Riffelung 26 besitzt, in gleicher Weise, wie die Anlagefläche 55 eine Riffelung 56 aufweist.

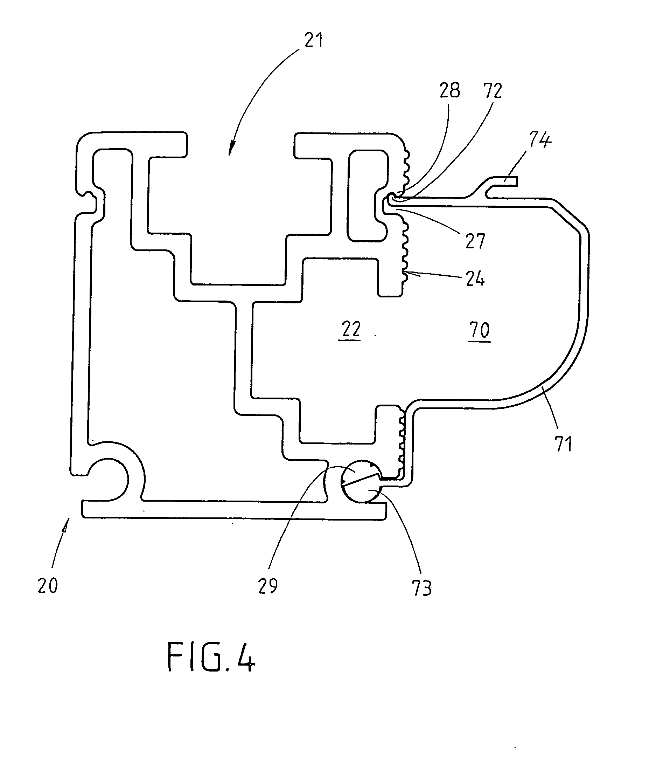

Soll an einer Tragschiene 20 ein Kabelkanal 70 vorgesehen werden, so ist dies an beiden Seitenwänden 24, 25 der Tragschiene 20 in diesem Ausführungsbeispiel möglich. Beide Seitenwände 24, 25 besitzen im Bereich der unteren Ecke eine seitlich zugängliche gelenkpfanneartige Aufnahme 29 und im oberen Bereich der Seitenwand 24, 25 eine Ausnehmung 27. Am oberen Rand der Ausnehmung 27 ist eine Klemmleiste 28 angeformt. Wie am besten aus Fig.4 zu ersehen, kann ein geschlossener Kabelkanal 70 durch eine zusätzliche Profilleiste 71 erzielt werden. Diese Profilleiste 71 ist schwenkbar an der Tragschiene 20 angeordnet. Dazu besitzt die Profilleiste 71 an ihrem unteren Ende einen Gelenkkopf 73, der in die gelenkpfannenartige Aufnahmen 29 eingreift. Die Profilleiste 71 besitzt im Querschnitt eine C-Form, so dass ein möglichst großer Kabelkanal 70 ausgebildet werden kann. In einer Öffnungsposition ist das obere Ende der Profilleiste 71 nicht mit der Tragschiene 20 verbunden, so dass zwischen der Seitenwand 24 und der Profilleiste 71 Kabel eingelegt werden können. Die Profilleiste 71 wird dann in Richtung der Tragschiene 20 geschwenkt und eine endseitig, am oberen Ende angeformte Hakenleiste 72 greift in die Aufnahme 27 an der Seitenwand 24 ein und verhakt sich hinter der Klemmleiste 28, was zu einer wirksamen Klemmverbindung führt. Diese Klemmverbindung zwischen der an der Profilleiste 71 angeformten Hakenleiste 72 und der an der Tragschiene 20 angeformten Klemmleiste 28 ist lösbar, so dass der einmal geschossene Kabelkanal 70 wieder geöffnet werden kann. Dieses Öffnen wird erleichtert, wenn benachbart zur Hakenleiste 72 eine Griffleiste 74 an der Profilleiste 71 vorgesehen wird. Eine solche Griffleiste 74 kann ein abragender abgebogener Steg sein, den man mittels eines Werkzeugs hintergreifen kann, um die Profilleiste 71 aus der Klemmverbindung zu lösen.

### Bezugszeichenliste

- 10: Modul
- 20: Tragschiene
- 21: Nut
- 211: vordere Aufnahmebereich
- 212: hintere Aufnahmebereich
- 22: Nut
- 221: obere Aufnahmebereich
- 222: untere Aufnahmebereich
- 23: Oberseite
- 24: Seitenfläche
- 25: Seitenfläche
- 26: Riffelung
- 27: Ausnehmung
- 28: Klemmleiste
- 29: gelenkpfannenartige Aufnahme
- 30: Klemmprofil
- 40: Schraubverbindung
- 41: Schraube
- 42: Mutter
- 43: Druckfeder
- 50: Dachhaken
- 51: Kragarm
- 52: obere Steg
- 53: untere Steg
- 54: Befestigungsplatte

- 55: Anlagefläche
- 56: Riffelung
- 57: Langloch
- 58: Verlängerungslinie
- 60: Schraubverbindung
- 61: Schraube
- 62: Mutter
- 63: Druckfeder
- 70: Kabelkanal
- 71: Profilleiste
- 72: Hakenleiste
- 73: Gelenkkopf
- 74: Griffleiste

## Patentansprüche

1. Befestigungsvorrichtung zur lösbaren Halterung von plattenförmigen Modulen (10, 10'), insbesondere Solarmodulen bzw. Photovoltaikmodulen,
mit Klemmprofilen (30) zum randseitigen Niederhalten der plattenförmigen Module (10),
mit mindestens einer Tragschiene (20) für die Halterung der plattenförmigen Module (10),
mit mindestens einem Dachhaken (50) zur lösbaren Befestigung der Tragschiene (20) am Dach,
wobei die Tragschiene (20) mindestens zwei in Längsrichtung der Tragschiene (20) verlaufende hinterschnittene Nuten (21, 22) besitzt, nämlich eine erste Nut (21) zur lösbaren Befestigung der Klemmprofile (30) mittels einer Schraubverbindung (40) und eine zweite Nut (22) zur lösbaren Befestigung der Dachhaken (50) mittels einer Schraubverbindung (60),
**dadurch gekennzeichnet,**
**dass** der Dachhaken (50) seitlich an der Tragschiene (20) festgelegt wird, nämlich mittels einer Befestigungsschraube (61), die mit einer Befestigungsmutter (62) zusammenwirkt, welche in der hinterschnittenen Nut (22) lagert, wobei die Nut (22) in einer Seitenwand (24) der Tragschiene (20) eingeformt ist und
sich an der gleichen Seitenwand (24) Mittel zur Bildung eines Kabelkanals (70) befinden.

2. Befestigungsvorrichtung nach Anspruch 1, **dadurch gekennzeichnet, dass** an beiden Seitenwänden (24, 25) der Tragschiene (20) Mittel zur Bildung eines Kabelkanals (70) vorgesehen sind.

3. Befestigungsvorrichtung nach Anspruch 1 oder 2, **dadurch gekennzeichnet, dass** ein geschlossener Kabelkanal (70) durch die Seitenwand (24) der Tragschiene (20) und durch eine Profilleiste (71) gebildet wird, wobei die Profilleiste (71) mit einem Ende schwenkbar an der Tragschiene (20) lagert sowie mit dem anderen Ende der Profilleiste (71) mit der Tragschiene (20) lösbar verbindbar ist.

4. Befestigungsvorrichtung nach Anspruch 3, **dadurch gekennzeichnet, dass** die Profilleiste (71) C-förmig geformt ist und für eine Klemmverbindung mit der Tragschiene (20) an ihrem oberen freien Ende eine Hakenleiste (72) besitzt, die mit einer Klemmleiste (28) an der Tragschiene (20) zusammenwirkt und für eine drehgelenkige Verbindung mit der Tragschiene (20) an ihrem unteren freien Ende zu einem Gelenkkopf (73) geformt ist, wobei der Gelenkkopf (73) in einer gelenkpfannenartigen Aufnahme (29) der Tragschiene (20) lagert.

5. Befestigungsvorrichtung nach Anspruch 3 oder 4, **dadurch gekennzeichnet, dass** zum leichten Öffnen des Kabelkanals (70), nämlich zum leichten Lösen der Klemmverbindung, an der Außenseite der Profileiste (71) benachbart zur Hakenleiste (72) eine Griffleiste (74) an der Profilleiste (71) vorgesehen ist.

6. Befestigungsvorrichtung nach einem der Ansprüche 1 bis 5, **dadurch gekennzeichnet, dass** nur zwei in Längsrichtung der Tragschiene (20) verlaufende hinterschnittene Nuten (21, 22) an der Tragschiene (20) vorgesehen sind, nämlich eine Nut (21) eingeformt in die Oberseite (23) der Tragschiene (20) und eine Nut (22) eingeformt in eine Seitenwand (24).

7. Befestigungsvorrichtung nach einem der Ansprüche 1 bis 6, **dadurch gekennzeichnet, dass** an der Seitenwand (24), in welche die Nut (22) zur Befestigung des Dachhakens (50) eingeformt ist, benachbart zur Nut (22) eine Riffelung (26) besitzt, vorzugsweise mit in Längsrichtung der Tragschiene (20) ausgerichteten Rippen.

8. Befestigungsvorrichtung nach Anspruch 7, **dadurch gekennzeichnet, dass** der Dachhaken (50) zur Verbindung mit der Tragschiene (20) eine vertikal ausgerichtete Anlagefläche (55) mit Langloch (57) aufweist, wobei die Anlagefläche (55) zur rutschfesten Anlage an der Seitenwand (24) der Tragschiene (20) mit einer Riffelung (56) versehen ist, welche horizontal verlaufende Rippen umfasst.

9. Befestigungsvorrichtung nach einem der Ansprüche 1 bis 7, **dadurch gekennzeichnet, dass** für die Schraubverbindungen (40, 60) mit der Tragschiene (20) Befestigungsmuttern (42, 62) verwendet werden, die an ihrer Unterseite mit einer Druckfeder (43, 63) verbunden sind, wobei sich die Druckfeder (43, 63) am Nutboden der jeweiligen Nut (21, 22) abstützt und durch ihre Federkraft die jeweilige Befestigungsmutter (42, 62) von innen gegen die Stege drückt, welche die Aufnahmeöffnung der Nut (21, 22) an der Tragschiene (20) begrenzen.

10. Befestigungsvorrichtung nach Anspruch 8, **dadurch gekennzeichnet, dass** die Befestigungsmuttern (42, 62) rautenförmig ausgebildet sind.

11. Befestigungsvorrichtung nach Anspruch 8 oder 9, **dadurch gekennzeichnet, dass** die Nut (21, 22) der Tragschiene (20) einen oberen Aufnahmebereich (211, 221) für die Befestigungsmuttern (42, 62) und einen darunter angeordneten unteren Aufnahmebereich (212, 222) für die Druckfeder (43, 63) besitzt, wobei die Breite des oberen Aufnahmebereichs (211, 221) größer ist als die Breite des unteren Aufnahmebereich (212, 222).

12. Befestigungsvorrichtung nach einem der Ansprüche 1 bis 10, **dadurch gekennzeichnet, dass** die Tragschiene (20) und die Profilleiste (71) Strangpressprofile aus Kunststoff oder Metall, vorzugsweise aus Aluminium sind.

13. Dachhaken für die beabstandete Befestigung einer Tragschiene (20) an einer Dachunterkonstruktion,
umfassend einen C-förmigen Kragarm (51), der einstückig am oberen Ende mit einem vertikal ausgerichteten oberen Steg (52) und der einstückig am unteren Ende mit einem vertikal ausgerichteten unteren Steg (53) ausgebildet ist,
wobei der obere Steg (52) zum Anschluss an eine Tragschiene (20) vorgesehen ist,
wobei der untere Steg (53) in eine waagerecht ausgebildete Befestigungsplatte (54) übergeht und die Befestigungsplatte (54) zur Verbindung mit der Dachunterkonstruktion vorgesehen ist,
**dadurch gekennzeichnet,**
**dass** der obere Steg (52) so über dem untere Steg (53) angeordnet ist, dass er sich ausgehend vom unteren Steg (53) in einer gedachten Verlängerungslinie befindet.

14. Dachhaken nach Anspruch 13, **dadurch gekennzeichnet, dass** der obere Steg (52) zum Anschluss an die Tragschiene (20) ein Langloch (57) besitzt, welches eine höhenvariable Schraubverbindungen (60) mit der Tragschiene (20) ermöglicht.

15. Befestigungsvorrichtung nach einem der Ansprüche 1 bis 12, **dadurch gekennzeichnet, dass** der obere Steg (52) eine senkrecht ausgerichtete Anlagefläche (55) zur Anlage an der Seitenwand (24) einer Tragschiene (20) besitzt, wobei die Anlagefläche (55) vorzugsweise zur rutschfesten Anlage an der Seitenwand (24) eine Riffelung (55) mit horizontal verlaufenden Rippen aufweist.
